Europäisches Patentamt

European Patent Office

Office européen des brevets

(19)

(11) Veröffentlichungsnummer: **0 262 457**

**A1**

(12) **EUROPÄISCHE PATENTANMELDUNG**

(21) Anmeldenummer: **87112966.4**

(22) Anmeldetag: **04.09.87**

(51) Int. Cl.⁴ **H04L 7/10 , H04L 7/04**

(30) Priorität: **26.09.86 DE 3632842**

(43) Veröffentlichungstag der Anmeldung:
**06.04.88 Patentblatt 88/14**

(84) Benannte Vertragsstaaten:
**AT BE CH DE FR GB IT LI NL SE**

(71) Anmelder: **Siemens Aktiengesellschaft Berlin
und München
Wittelsbacherplatz 2
D-8000 München 2(DE)**

(72) Erfinder: **Ballweg, Adolf, Dipl.-Ing.
Klessheimer Weg 14
D-8034 Germering(DE)**

(54) **Anordnung zum Synchronisieren eines aus einem Datenbitstrom abgeleiteten Bytetaktes mit einem byteorientierten Verarbeitungstakt einer Endeinrichtung.**

(57) In einer an ein paketorientiertes, ringförmiges Netz angeschlossenen Endeinrichtung wird nach einer Serien-Parallelwandlung des Datenbitstromes (D) mittels einer Vergleichereinrichtung (VE) der Beginn und das Vorliegen einer Paketanfangsinformation (pai) ermittelt, wobei zwischen den Paketen Füllinformationen (fi) übertragen werden. Mit dem Erkennen des Beginns der Paketanfangsinformation (pai) wird ein in einer Bytetakterzeugungseinrichtung (BTE) angeordneter Zähler (Z) angehalten und bei Vorliegen der kompletten Paketanfangsinformation (pai) zurückgesetzt, wodurch ein interner, aktueller Bytetaktimpuls verlängert und damit der Paket-Bytetakt mit dem endgeräteinternen Bytetakt (byt) synchronisiert wird.

## Anordnung zum Synchronisieren eines aus einem Datenbitstrom abgeleiteten Bytetaktes mit einem byteorientierten Verarbeitungstakt einer Endeinrichtung

Die Erfindung betrifft eine Anordnung zum Ableiten eines Bytetaktes aus einem seriellen, paketübertragungsorientierten Datenbitstrom eines eine sehr hohe Datenübertragungsgeschwindigkeit aufweisenden ringförmigen Netzes sowie zum Synchronisieren des abgeleiteten Bytetaktes mit einem internen Verarbeitungstakt einer an das ringförmige Netz angeschlossenen Endeinrichtung, wobei zwischen den mit jeweils einer Datenpaketbeginninformation versehenen Datenpaketen wenigstens eine auf allen Bitpositionen die gleiche binäre Information aufweisende Füllinformation in den Datenstrom eingefügt ist und in einer von einem aus dem Datenbitstrom abgeleiteten Datenbittakt getakteten Serien-Parallel-Umsetzeinrichtung die Umsetzung des seriellen Datenstromes in eine an die interne Verarbeitungsgeschwindigkeit angepaßte Bytefolge erfolgt.

Die in der paketübertragungsorientierten Datenübertragungs-bzw. Datenmultiplextechnik bekannten Erkennungs-und Synchronisationsverfahren dienen dem Erkennen eines Paketanfangs und damit auch des Paket-Bytetaktes und dem Synchronisieren dieses Bytetaktes mit einem in einer Endeinrichtung verwendeten internen Byte-Verarbeitungstakt. Hierbei werden die seriellen, paketübertragungsorientierten Daten in eine Serien-Parallel-Umsetzeinrichtung - meist realisiert durch ein Schieberegister - eingelesen und die an den Parallelausgängen des Schieberegisters vorliegenden Daten auf Vorhandensein einer Paketanfangs-Bitkombination untersucht. Zum Zeitpunkt des Auftretens einer solchen Bitkombination werden die Daten aus dem Schieberegister in ein endgeräteinternes Register eingelesen und der endgeräteinterne Byte-bzw. Verarbeitungstakt an den von der Paketanfangsinformation abgeleiteten Paket-Bytetakt angepaßt. Aufgrund der sofortigen Synchronisation der beiden Bytetakte treten sowohl Verkürzungen als auch Verlängerungen der endgeräteinternen Bytetakeimpulse auf. Eine Verkürzung des endgeräteinternen Bytetaktimpulses bedeutet eine kurzzeitige Erhöhung der Bytetakt-bzw. Verarbeitungsgeschwindigkeit im Endgerät, wodurch insbesondere bei sehr hohen Datenübertragungsgeschwindigkeiten in ringförmigen Netzen die zulässige Grenzverarbeitungsgeschwindigkeit der folgenden Schaltkreistechnik - auch einer sehr schnellen Schaltkreistechnik - überschritten und erhebliche Störungen in den weiterverarbeitenden, bytetaktgetakteten Systemkomponenten der Endgeräte hervorgerufen werden.

Der Erfindung liegt die Aufgabe zugrunde, eine Anordnung zum Ableiten eines Bytetaktes aus einem seriellen, paketübertragungsorientierten Datenstrom sowie zum Synchronisieren des abgeleiteten Bytetaktes mit einem internen Verarbeitungstakt einer an ein ringförmiges Netz angeschlossenen Einrichtung anzugeben, bei der keine Verkürzungen der endgeräteinternen Bytetakt-bzw. Verarbeitungstaktimpulse auftreten und kurzzeitige Störungen während der Bytetaktsynchronisation vermieden werden.

Die Aufgabe wird ausgehend von der eingangs beschriebenen Serien-Parallel-Umsetzeinrichtung durch die Merkmale des Anspruches 1 gelöst.

Der mit der Erfindung erzielbare Vorteil besteht insbesondere darin, daß ein in der Bytetakterzeugungseinrichtung implementierter Zähler nach dem Erkennen einer von der Füllinformation unterschiedlichen Information dann angehalten wird, wenn die Binärinformation des Byte-bzw. Verarbeitungstaktes am Ausgang der Verzögerungseinrichtung derjenigen Binärinformation entspricht, die der Zählerausgang nach dem Rücksetzen aufweist und wodurch eine Verkürzung des endgeräteinternen Bytetaktimpulses ausgeschlossen und der Einfluß von Störungen verhindert wird.

Nach einer vorteilhaften Weiterbildung der Erfindung gemäß Patentanspruch 2 ist in der Serien-Parallel-Umsetzeinrichtung eine der Anzahl der Bitpositionen einer Datenpaketbytes entsprechende Anzahl von Registern angeordnet, und bei Vorliegen einer der Füllinformation fi entsprechenden Information zu Beginn der Paketanfangsinformation pai wird die Anzahl der Register um eine der Anzahl der Füllinformationsbits, die bis zum Auftreten der ersten zur Füllinformation unterschiedlichen Bitinformation vorliegen, entsprechende Anzahl erhöht. Da die international standardisierten Paketanfangsinformationen oftmals Bitkombinationen aufweisen, deren Anfangsinformationsbits den Füllinformationsbit entsprechen, kann eine der Füllinformation unterschiedliche Information und damit eine Paketanfangsinformation erst nach mehreren in die Register der Serien-Parallel-Umsetzeinrichtung SPU eingelesenen Datenbits erkannt werden. Um jedoch bei Beginn der Paketanfangsinformation den in der Bytetakterzeugungseinrichtung implementierten Zähler zu stoppen, kann die Anzahl der Register gemäß den Bedingungen des Patentanspruches 2 erhöht werden. Mit dieser Maßnahme wird sichergestellt, daß die parallel an den Ausgängen der Serien-Parallel-Umsetzeinrichtung vorliegenden Daten nicht mittels eines intern erzeugten Bytetaktimpulses - der Zähler wurde nicht gestoppt - zu einem Zeitpunkt gelesen und in den Parallelspeicher übernommen werden, bei dem erst einige Informationsbits der Paketanfangsinformation in die Serien-Parallel-Umsetzeinrichtung eingelesen wurden.

Im folgenden wird ein Ausführungsbeispiel der Erfindung anhand eines Blockschaltbildes näher erläutert.

Das Blockschaltbild zeigt die zur Erläuterung notwendigen Systemkomponenten einer Anschlußeinheit für den Zugriff einer Endeinrichtung auf den Datenbitstrom D eines mit hohen Übertragungsgeschwindigkeiten - > 50 MBit - kommunizierenden ringförmigen Netzes. Die Übertragung der Daten D auf dem ringförmigen Netz erfolgt mittels byteorientierter Datenpakete. Hierbei ist die Paketanfangsinformation pai sowie die zwischen den Datenpaketen übermittelte Füllinformation fi beispielsweise nach einem ANSI-FDDI-Protokoll wie folgt definiert: Füllbyte (10 bit) = 11111 11111 und Paketanfangsinformation 11001 10001. Diese paketorientierten Daten D werden in eine vom Datenbitstrom abgeleitete Datenbittakt dbt getaktete Serien-Parallel-Umsetzeinrichtung SPU seriell eingelesen. Die Serien-Parallel-Umsetzeinrichtung SPU ist beispielsweise durch ein zwölf Parallelausgänge SPA aufweisendes Schieberegister realisiert. Die zwei zusätzlichen, eine Register-Bytelänge überschreitende Anzahl von Register bzw. Parallelausgänge SPA sind erforderlich, um die erste, von der Füllinformation fi unterschiedliche Paketanfangsinformation pai - nach ANSI-FDDI-Protokoll das dritte Bit mit der binären "0"-Information - frühzeitig genug zu erkennen. Alle zwölf Parallelausgänge SPA werden zu einer Vergleichereinrichtung VE und die Parallelausgänge SPA3...12 zu einem Parallelspeicher PS weitergeleitet. In der eine Datenbittaktzuführung aufweisenden Vergleichereinrichtung VE werden die Parallelausgänge SPA datenbittaktweise auf das Vorliegen einer der Füllinformation fi unterschiedlichen Paketanfangsinformation pai, in diesem Falle auf das Vorliegen der ersten binären "0" am ersten Parallelausgang SPA, untersucht. Liegt eine derartige Information vor, so wird mittels eines in der Vergleichereinrichtung VE implementierten Vergleichers V1 eine Halteinformation hi gebildet und diese über einen ersten Eingang und den Ausgang eines UND-Verknüpfungsgliedes UD und über einen ersten Vergleicherausgang VA1 mittels entsprechender Verbindungen zu einem Halteeingang HE einer Bytetakterzeugungseinrichtung BTE weitergeleitet. Während der folgenden zwölf Datenbittakte dbt werden in der Vergleichereinrichtung VE die Parallelausgänge SPA auf das Vorliegen der Paketanfangsinformation pai - in diesem Fall auf die binäre Anfangskombination 11001 10001 - hin untersucht. Liegt die entsprechende Bitkombination vor, so wird in einem zweiten in der Vergleichereinrichtung V implementierten Vergleicher V2 eine Übernahme-bzw. Rücksetzinformation üri gebildet und zu einem zweiten, mit einem Eingang eines binären ODER-Verknüpfungsgliedes OD verbundenen Vergleicherausgangs VA2 geführt. Die Übernahme-bzw. Rücksetzinformation üri gelangt über den Ausgang des ODER-Verknüpfungsgliedes OD sowohl zu einem Rücksetzeingang RE der Bytetakterzeugungseinrichtung BTE als auch zu einem Übernahmeeingang ÜE des Parallelspeichers PS. Die Halteinformation hi und die Rücksetzinformation üri werden zu einem Halteeingang HE bzw. zu einem Rücksetzeingang RE eines vom Datenbittakt dbt getakteten und in der Bytetakterzeugungseinrichtung BTE implementierten Zählers Z weitergeleitet. Werden innerhalb des Datenbitstromes D keine Paketinformationen pai übertragen, so wird nach dem Zählen von jeweils zehn Datenbittakten dbt am Zählerausgang ZA eine Übernahme-bzw. Rücksetzinformation üri abgegeben und einerseits über eine entsprechende Verbindung zum zweiten Eingang des ODER-Verknüpfungsgliedes OD und andererseits über eine entsprechende Verbindung zu einer Verzögerungseinrichtung VZ weitergeleitet.

Mittels dieser an den Rücksetzeingang RE übermittelten Übernahme-bzw. Rücksetzinformation üri wird der Zähler Z zurückgesetzt - d. h. alle Zählregister weisen die gleiche binäre Information auf - und somit der Zählvorgang erneut gestartet. Hiermit liegt die am Zählerausgang ZA abgegebene Übernahme-bzw. Rücksetzinformation üri in einem auf zehn Datenbit abgestimmten und eine Bittaktimpulslänge aufweisenden Bytetakt vor. In der nachfolgenden Verzögerungseinrichtung VZ kann diese byteweise vorliegende Übernahme-bzw. Rücksetzinformation üri um maximal zehn Datenbit takte dbt verzögert - eine sinnvolle Verzögerungszeit sind vier, fünf oder sechs Datenbittakte dbt - und anschließend am Ausgang A der Bytetakterzeugungseinrichtung BTE als endgeräteinterner Byte-bzw. Verarbeitungstakt byt bereitgestellt werden. Des weiteren kann mittels der Verzögerungseinrichtung VZ das Impuls-Pausenverhältnis des Byte-bzw. Verarbeitungstaktes byt in zehn Stufen - entsprechend der zehn Bittakte dbt je Bytetakt byt - variiert werden. Dieser endgeräteinterne Byte-bzw. Verarbeitungstakt byt wird über eine entsprechende Verbindung zu dem zweiten Eingang des in der Vergleichereinrichtung VE implementierten UND-Verknüpfungsgliedes UD weitergeleitet. Mittels dieser UND-Verknüpfungsfunktion wird sichergestellt, daß der Zähler Z nur dann angehalten wird, wenn die Binärinformation des Byte-bzw. Verarbeitungstaktes byt am Ausgang A der Verzögerungseinrichtung derjenigen Binärinformation entspricht, die der Zählerausgang nach dem Rücksetzen aufweist und somit eine Verkürzung des Byte-bzw. Verarbeitungsimpulses ausgeschlossen und der Einfluß von Störungen verhindert wird. Um auch die im Parallelspeicher PS vorliegenden byteweise gespeicherten Informationen verzögert an das Endgerät übergeben zu können, sind die Ausgänge des Parallelspeichers PS mit einem weiteren, vom endgeräteinternen Byte-bzw. Verarbeitungstakt byt gesteuerten, internen Parallelspeicher IPS verbunden. Wird am ersten Vergleicherausgang VA1 ein Vorliegen der ersten binären "0" eines Paketanfangsbytes durch Übertragen der Halteinformation hi signalisiert, so wird der Zählvorgang im Zähler Z sofort gestoppt und der am Zählerausgang ZA anliegende Rücksetzinformations-Zustand gehalten. Dieser Zustand des Zählerausgangs ZA wird solange beibehalten bzw. ein endgeräteinterner Bytetaktimpuls wird solange verlängert, bis nach einer vorgegebenen Anzahl von Datenbittakten dbt am Vergleicherausgang VA2 eine Übernahme-bzw. Rücksetzinformation üri vorliegt und den Zähler Z zurücksetzt bzw. den endgeräteinternen Bytetaktimpuls beendet. Die folgenden endgeräteinternen und auf die Paketanfangsinformation pai abgestimmten Bytetaktimpulse werden, wie bereits beschrieben - durch Zählen der Datenbittakte dbt erzeugt und an die weiterverarbeitenden Systemkomponenten des Endgerätes weitergeleitet.

Alle Systemkomponenten der erfindungsgemäßen Anordnung sind mittels integrierter ECL-Schaltkreise der schnellen 100 K-Technik von Fairchild, mittels programmierbarer Logik-Arrays oder mittels kundenspezifischer Gate-Array-Schaltungstechnik realisierbar. Beispielhaft sind nachfolgend für die einzelnen Systemkomponenten jeweils eine Realisierungsmöglichkeit mittels ECL-bzw. PLA-Schaltkreistechnik aufgelistet:

Serien-Parallel-Umsetzeinrichtung SPU,
Parallelspeicher PS, interner Parallelspeicher IPS:
    F 100 141
Zähler Z:    F 100 136 und F 100 136
Verzögerungseinrichtung VZ:    F 100 102
Vergleichereinrichtung VE, UND-und ODER-Verknüpfungsglied: PLA-Schaltkreis

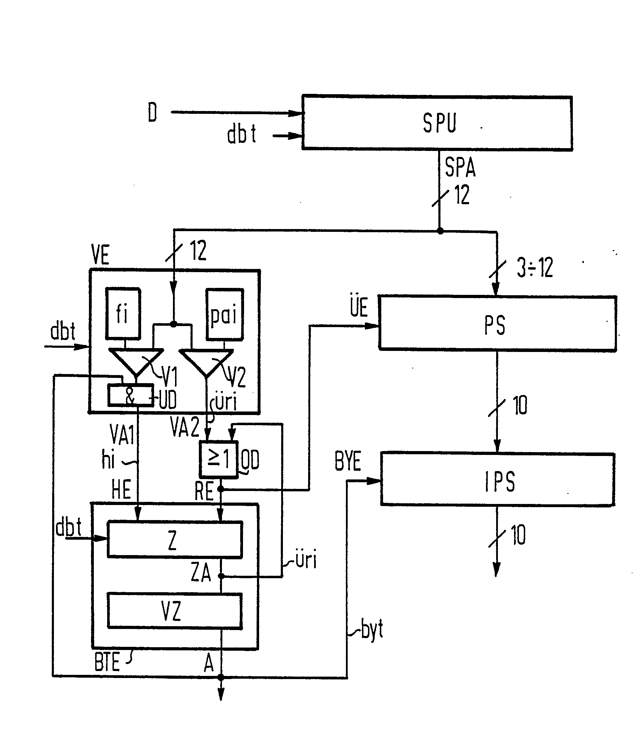

## Ansprüche

1. Anordnung zum Ableiten eines Bytetaktes aus einem seriellen, paketübertragungsorientierten Datenbitstrom eines für Lichtwellenleiter-Datenübertragung geeigneten, ringförmigen Netzes sowie zum Synchronisieren des abgeleiteten Bytetaktes mit einem internen Verarbeitungstakt einer an das ringförmige Netz angeschlossenen Endeinrichtung, wobei zwischen den mit jeweils einer Datenpaketanfangsinformation versehenen Datenpaketen wenigstens eine auf allen Bitpositionen die gleiche binäre Information aufweisende Füllinformation in den Datenstrom eingefügt ist und in einer von einem aus dem Datenbitstrom abgeleiteten Datenbittakt getakteten Serien-Parallel-Umsetzeinrichtung die Umsetzung des seriellen Datenstromes in eine an die interne Verarbeitungsgeschwindigkeit angepaßte Bytefolge erfolgt, **dadurch gekennzeichnet,** daß die Parallelausgänge (SPA) der Serien-Parallel-Umsetzeinrichtung (SPU) mit einem Vergleicher (V) und mit den Eingängen eines Parallelspeichers (PS) verbunden sind, daß im Vergleicher (V) einerseits nach Feststellen einer von der Füllinformation (fi) unterschiedlichen Bitinformation eine Halteinformation (hi) gebildet und über einen ersten Eingang und den Ausgang eines UND-Verknüpfungsgliedes (UD) einem ersten Vergleicherausgang (VA1) zugeführt wird und andererseits nach Erkennen der Paketanfangsinformation (pai) eine Übernahme-bzw. Rücksetzinformation (üri) gebildet und an einen zweiten Vergleicherausgang (VA2) geführt wird, daß ein in einer Bytetakterzeugungseinrichtung (BTE) angeordneter und vom Datenbittakt (dbt) getakteter Zähler (Z) bei Vorliegen der über den mit dem ersten Vergleicherausgang (VA1) verbundenen Halteeingang (HE) zugeführten Halteinformation (hi) angehalten wird und bei Vorliegen einer über einen Eingang und den Ausgang eines ODER-Verknüpfungsgliedes (OD) und über einen Rücksetzeingang (RE) zugeführten Übernahme-bzw. Rücksetzinfor mation (üri) zurückgesetzt wird, daß eine vom Zählerausgang (ZA) abgegebene Übernahme-bzw. Rücksetzinformation (üri) an eine Verzögerungseinrichtung (VZ) sowie an einen zweiten Eingang des ODER-Verknüpfungsgliedes (OD) weitergeleitet wird und der Ausgang des ODER-Verknüpfungsgliedes zusätzlich mit dem Übernahmeeingang (ÜE) des Parallelspeichers (PS) verbunden ist, daß in der Verzögerungseinrichtung (VZ) die Übernahme-bzw. Rücksetzinformation (üri) um eine maximal der Bytelänge entsprechende Anzahl von Datenbittakten (dbt) verzögerbar sowie das Impuls-Pausenverhältnis variierbar ist und über den Ausgang (A) als byteorientierter interner Byte-bzw. Verarbeitungstakt (byt) an einen Byteeingang (BYE) eines internen Parallelspeichers (IPS) gelangt sowie daß mittels der Übernahme-bzw. Rücksetzinformation (üri) die parallel vorliegenden Daten in den Parallelspeicher (PS) und mittels des Byte-bzw. Verarbeitungstaktes (byt) in den internen Parallelspeicher (IPS) übertragen werden.

2. Anordnung nach Anspruch 1,
**dadurch gekennzeichnet,**
daß in der Serien-Parallel-Umsetzeinrichtung (SPU) eine der Anzahl der Bitpositionen eines Datenpaketbytes entsprechende Anzahl von Registern angeordnet ist und bei Vorliegen einer der Füllinformation (fi) entsprechenden Information zu Beginn der Paketanfangsinformation (pai) die Anzahl der Register um eine Anzahl der Füllinformationsbit, die bis zum Auftreten der ersten zur Füllinformation (fi) unterschiedlichen Bitinformation vorliegen, entsprechende Anzahl erhöht wird.

3. Anordnung nach Anspruch 1 oder 2,
**dadurch gekennzeichnet,**
daß die Paketanfangs-und Füllbitinformationen (pai, fi) mittels einer eine Bytelänge aufweisende und definierte Bitfolge realisiert sind.

| | | | Nummer der Anmeldung |
|---|---|---|---|
| ))) | Europäisches Patentamt | **EUROPÄISCHER RECHERCHENBERICHT** | EP 87 11 2966 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE, INFOCOM'86, FITH ANNUAL CONFERENCE " COMPUTERS AND COMMUNICATIONS INTEGRATION DESIGN, ANALYSIS, MANAGEMENT, 8.-10. April 1986, Miami, Florida, Silver Springs, Seiten 323-330; F.E. ROSS: "FDDI-fiber, farther, faster" * Seite 324, linke Spalte, Zeile 20 - rechte Spalte , Zeile 3 * --- | 1 | H 04 L 7/10 H 04 L 7/04 |
| A | EP-A-0 108 028 (SERVEL) * Zusammenfassung * --- | 1-3 | |
| A | DE-A-3 246 211 (PHILIPS) * Seite 4, Zeilen 4-10 * ----- | 1 | |
| | | | **RECHERCHIERTE SACHGEBIETE (Int. Cl.4)** |
| | | | H 04 L |

Der vorliegende Recherchenbericht wurde für alle Patentansprüche erstellt

| Recherchenort | Abschlußdatum der Recherche | Prüfer |
|---|---|---|
| DEN HAAG | 18-12-1987 | VERSLYPE J.P. |